# EUROPEAN PATENT APPLICATION

(11) **EP 4 353 879 A1**
(43) Date of publication of application: **17.04.2024**
(21) Application number: 22820369.1
(22) Date of filing: 08.02.2022
(51) Int. Cl.: D01F 1/04, D01F 6/60, D01D 5/04

(54) **ARAMID DOPE-DYED YARN AND MANUFACTURING METHOD THEREFOR**

(30) Priority: 09.06.2021 KR 20210074796
(71) Applicant: Toray Advanced Materials Korea Inc., Gumi-si, Gyeongsangbuk-do 39389 (KR)
(72) Inventor: KIM, Jeong Sam, Gumi-si Gyeongsangbuk-do 39389 (KR); LEE, Ju Hyun, Gumi-si Gyeongsangbuk-do 39389 (KR)
(74) Representative: Groth & Co. KB
(86) International application number: PCT/KR2022/001908
(87) International publication number: WO 2022/260239

(57) **Abstract**

The present invention relates to an aramid dope-dyed yarn and a manufacturing method therefor, the aramid dope-dyed yarn being manufactured by blend spinning a mixture dope comprising: a master batch dope comprising a pigment and a meta-aramid dope, which is obtained by polymerizing m-phenylene diamine (MPD) and isophthaloyl chloride (IPC); and the meta-aramid dope, and provided is an aramid dope-dyed yarn having less color deviation and excellent light fastness due to uniform pigment dispersion.

## Description

### Technical Field

The present invention relates to an aramid dope-dyed yarn and a manufacturing method therefor, and more specifically, to a meta-aramid dope-dyed yarn, which has less color deviation and excellent light fastness, and a manufacturing method therefor.

### Background Art

In general, polyamide-based synthetic resins are classified into aliphatic polyamide and aromatic polyamide. Aliphatic polyamide is commonly known by the trade name "nylon," while aromatic polyamide is well-known by the trade name "aramid."

Of the aliphatic polyamides, nylon 6, nylon 6,6 and the like are used as the most general thermoplastic engineering plastic materials and are utilized in the fields including a variety of molding materials as well as fibers. Nylon resins used in the molding are produced into reinforced plastics as for a composite material by reinforcement with mineral or glass fibers in order to improve flame retardancy and impact resistance, reduce the price and enhance mechanical properties such as elasticity.

Aromatic polyamide so-called "aramid" developed in the 1960s for improving heat resistance of nylon which is an aliphatic polyamide and is well-known by the trade names such as NOMEX^{®} and KEVLAR^{®}. These aromatic polyamide materials have superior heat resistance and high tensile strength enough to be utilized in fiber applications such as flame retardant fiber fabrics and tire cords.

General aliphatic polyamide refers to a synthetic resin which contains aliphatic hydrocarbon bound between amide groups but aramid refers to a synthetic resin in which benzene groups are bonded to two aromatic rings with 85% amide bond between amid groups. The aliphatic hydrocarbon of the aliphatic polyamide readily undergoes molecular motion when heat is applied thereto. In contrast, the benzene ring in aromatic polyamide, with its rigid molecular chains, does not readily allow molecular motion even upon application of heat, and thus has heat stability and high elasticity, showing a significant difference in characteristics from general aliphatic polyamide.

Aromatic polyamides are classified into para-aramid and meta-aramid. A representative example of para-aramid is KEVLAR^{®} developed by Dupont. Para-aramid is an aramid that features a benzene ring bonded to an amide group at the para-position. Due to its extremely rigid molecular chains and linear structure, it exhibits very high strength and a particularly high elastic modulus, resulting in remarkable shock absorption capabilities, allowing to be used in bulletproof garments, bulletproof helmets, safety gloves or boots, and firefighter garments. Additionally, it is utilized in sports equipment materials such as tennis rackets, boats, hockey sticks, fishing lines, and golf clubs. In industrial settings, para-aramid finds use in fiber-reinforced plastics (FRP) and in fibers for replacing asbestos. Representative examples of meta-aramid include NOMEX^{®} developed by DuPont and CONEX^{®} developed by Teijin. Meta-aramid, characterized in a benzene ring bonded to an amide group at the meta-position, has similar strength and elongation to regular nylon, but has significantly high heat stability, and is lighter compared to other heat-resistant materials and is capable of absorbing sweat to some extent, thereby having an advantage of being fresh and pleasant. Initially limited in color options, modern meta-aramid is available in a variety of colors, including fluorescent colors. Meta-aramid finds applications in firefighting garments, uniforms for racing drivers, astronaut suits, and heat-resistant workwear, as well as industrial applications, such as high-temperature filters.

One method of utilizing such aramid fibers involves manufacturing a dope-dyed yarn by adding a pigment to meta-aramid dope. However, when producing the dope-dyed yarn using meta-aramid dope, the added pigment may degrade the physical properties of the dope-dyed fiber. In particular, significant color deviations may occur due to uneven pigment dispersion, and light fastness may be reduced.

Prior Patent Document 1: Korean Patent No. 10-1558064

### Detailed Description of the Invention

### Technical problem

The present invention is devised to solve the aforementioned problems, and an object of the present invention is to provide an aramid dope-dyed yarn with uniform dispersion of a pigment added to high-viscosity meta-aramid polymer and improved light fastness, and a manufacturing method therefor.

The above and other objects and advantages of the present invention will become apparent from the following description of preferred embodiments.

### Technical Solution

The above object is achieved by an aramid dope-dyed yarn being manufactured by blend spinning a mixture dope comprising: a master batch dope comprising a pigment and a meta-aramid dope, which is obtained by polymerizing m-phenylene diamine (MPD) and isophthaloyl chloride (IPC); and the meta-aramid dope.

Preferably, the aramid dope-dyed yarn may contain 0.01 to 2.5 parts by weight of pigment based on 100 parts by weight of meta-aramid fiber.

Preferably, the aramid dope-dyed yarn may have a light fastness of grade 4 to 5 measured after 40 hours of exposure to a xenon arc light source according to KS K ISO 105-B02 measurement method.

Preferably, an undecomposed residue of the pigment at a temperature of 350 °C is 95% or more.

Preferably, a strength of the aramid dope-dyed yarn may be 3.0 to 5.5 g/d.

Preferably, the aramid dope-dyed yarn may have a single yarn fineness of 0.5 to 5.0 deniers.

In addition, the above object is achieved by a method of manufacturing an aramid dope-dyed yarn, comprising: a first step of producing a meta-aramid dope by polymerizing m-phenylene diamine (MPD) and isophthaloyl chloride (IPC), a second step of producing a master batch dope by dispersing and mixing a pigment and a meta-aramid dope, a third step of producing a mixture dope by mixing the meta-aramid dope and the master batch dope, and a fourth step of spinning the mixture dope to manufacture an aramid dope-dyed yarn.

Preferably, the master batch dope in the second step may contain 0.1 to 10% by weight of pigment.

Preferably, a solution viscosity of the master batch dope may be 5 to 50 poise at 25 °C .

Preferably, a solution viscosity of the mixture dope may be 150 to 300 poise at 100°C and 350 to 650 poise at 80°C .

Preferably, a dispersion particle size of the pigment in the master batch dope may be less than 5 *µ*m.

Preferably, the fourth step may be performed by dry spinning.

### Advantageous Effects

According to an embodiment of the present invention, an aramid dope-dyed yarn and its manufacturing method may provide an aramid dope-dyed yarn with less color deviation and excellent light fastness, due to uniform pigment dispersion.

However, the effects of the present invention are not limited to the effects mentioned above, and other effects not mentioned will be clearly understood by those skilled in the art from the description below.

### Brief Description of Drawings

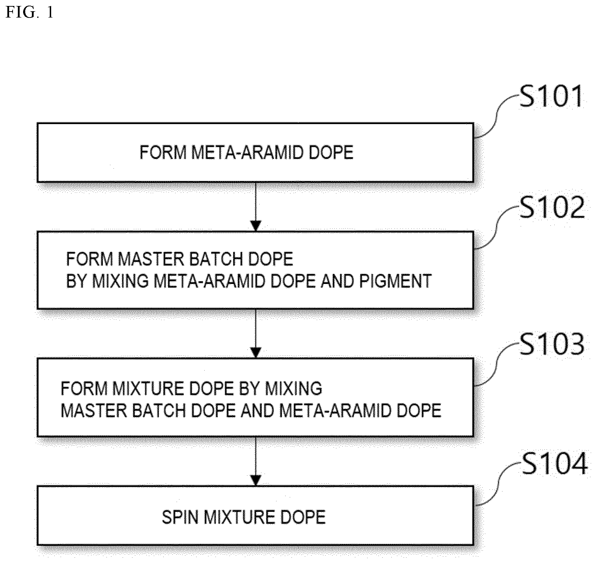

FIG. 1 is a flowchart illustrating a method of manufacturing an aramid dope-dyed yarn according to an embodiment of the present invention.

### Mode for Invention

The invention will be described more fully with reference to the accompanying drawings, in which example embodiments of the inventions are shown. This invention may, however, be embodied in many different forms and should not be construed as limited to only the embodiments set forth herein.

In the drawings, the thickness of layers and regions are exaggerated for clarity. Like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

Unless otherwise defined, all technical and scientific terms used herein have the same meaning as commonly understood by one of ordinary skill in the art to which this invention belongs. In case of conflict, the present specification, including definitions, will control. Although methods and materials similar or equivalent to those described herein can be used in the practice or testing of the invention, suitable methods and materials are described herein.

FIG. 1 is a flowchart illustrating a method of manufacturing an aramid dope-dyed yarn according to an embodiment of the present invention.

Referring to FIG. 1, according to an embodiment of the present invention, a method of manufacturing an aramid dope-dyed yarn includes a first step S101 of producing a meta-aramid dope by polymerizing m-phenylene diamine (MPD) and isophthaloyl chloride (IPC), a second step S102 of producing a master batch dope by dispersing and mixing a pigment and a meta-aramid dope, a third step S103 of producing a mixture dope by mixing the meta-aramid dope and the master batch dope, and a fourth step S104 of spinning the mixture dope to manufacture an aramid dope-dyed yarn.

As described above, in the present invention, the aramid dope-dyed yarn is produced by mixing a pigment and another meta-aramid dope to produce the master batch dope (second step), followed by mixing the master batch dope with the meta-aramid dope polymerized in the first step, rather than directly mixing a pigment in the meta-aramid dope polymerized in the first step. If the second step (master batch step) is omitted, and the pigment is directly dispersed in the meta-aramid polymer, the high viscosity of the meta-aramid polymer makes dispersion challenging. Physical and facility requirements needed to overcome this challenge and achieve dispersion are significant, requiring more investment in equipment than necessary, leading to reduced economic feasibility. Therefore, by using a master batch dope designed with low viscosity, the present invention pre-disperses the pigment within meta-aramid while simultaneously wetting the surface of the pigment with the meta-aramid. This enhances the maintenance of dispersion state of the pigment in the master batch in the subsequent step, the third step of mixing the master batch and the meta-aramid.

The first step S101 of producing the meta-aramid dope by polymerizing m-phenylene diamine (MPD) and isophthaloyl chloride (IPC) involves producing the meta-aramid dope by polymerizing meta-aramid through MPD and IPC.

The solution viscosity of the meta-aramid dope produced in the first step S101 is preferably 150 to 300 poise at 100°C and 350 to 650 poise at 80°C. In addition, a molecular weight is preferable in the range of weight-average molecular weight of 300,000 to 400,000 from the perspective of the physical properties of fiber. If the weight-average molecular weight of the meta-aramid dope is 300,000 or less, it adversely affects the strength and heat resistance of the fiber. If it exceeds 400,000, the spinning process becomes poor, making it difficult to produce uniform fiber products.

Next, in the second step S102 of producing the master batch dope by dispersing and mixing the pigment and the meta-aramid dope, the pigment is dispersed and mixed into the meta-aramid dope produced in the first step S101 to produce the master batch dope. In this case, the master batch preferably contains 0.1 to 10% by weight of pigment. If the pigment content is less than 0.1% by weight, a shielding effect by the meta-aramid during the fiberization process of the high-viscosity meta-aramid polymer occurs, making it difficult to achieve the desired color expression. Consequently, the amount of pigment needed to achieve the desired color is increased, leading to an increase in production costs. On the other hand, if the pigment content exceeds 10% by weight, there is a higher risk of pigment reaggregation, increasing the likelihood of instability in the fiberization process. In contrast, the present invention enables color expression with a relatively low pigment content, reducing cost burdens and preventing degradation of physical properties caused by the pigment through uniform distribution of the pigment.

The solution viscosity of the master batch dope produced in the second step S102 is preferably 5 to 50 poise at 25 °C . If the solution viscosity of the master batch dope is less than 5 poise at 25 °C, precipitation due to aging may occur after pigment dispersion, adversely affecting storage stability. On the other hand, if it exceeds 50 poise, when producing the mixture dope, there may be a localized uneven dispersed phase. In this case, it is preferable to control the solution viscosity of the master batch dope through a polar amide-based solvent.

The dispersion particle size of the pigment in the master batch dope is preferably less than 5 µm. If the dispersion particle size of the pigment is 5 µm or more, during the fiberization process (spinning, post-treatment), the pigment may act as foreign matter, causing an imbalance in physical stress, which may lead to issues such as poor spinning or thread breakage during the spinning process.

The pigment preferably includes at least one selected from organic pigments, inorganic pigments, and fluorescent pigments, and it is more preferable to use an organic pigment with high melting point for increased thermal stability.

Next, in the third step S103 of producing the mixture dope by mixing the meta-aramid dope and the master batch dope, the meta-aramid dope produced in the first step S101 is mixed with the master batch dope produced in the second step S102.

At this point, it is preferable to mix 1,000 to 4,000 parts by weight of meta-aramid dope based on 100 parts by weight of the master batch dope. If the content of the meta-aramid dope is less than 1,000 parts by weight, the viscosity of the mixture dope decreases, making it impractical for the spinning process. Additionally, if the content of the meta-aramid dope exceeds 4,000 parts by weight, a high-temperature spinning environment is required to ensure spinning, leading to economic inefficiency due to the unnecessary addition of heat sources. This may hinder the uniformity of the final fiber product, cause a lower concentration of meta-aramid, and negatively affect the color expression of the pigment due to the shielding effect of the meta-aramid.

The solution viscosity of the mixture dope is preferably 150 to 300 poise at 100 °C and 350 to 650 poise at 80 °C. If the solution viscosity of the mixture dope is less than 150 poise at 100 °C or less than 350 poise at 80°C, there may be a problem of poor spinning process in which the fiber itself cannot withstand the tension received during the spinning process. On the other hand, if the solution viscosity exceeds 300 poise at 100°C or 650 poise at 80°C, uniform discharge from the nozzle becomes difficult during the spinning process. The described-above solution viscosity of the mixture dope is controlled by adding a polar amide-based solvent during the production of the master batch dope in the second step S102 and adjusting the mixing ratio of the master batch dope and the meta-aramid dope during the third step S103.

The master batch dope with pigment mixed in the meta-aramid dope has a melting point viscosity of 5 to 50 poise at 25 °C, as described above. Therefore, in the third step S103, through a process of mixing the meta-aramid dope and the master batch dope, the relatively high-viscosity meta-aramid dope is mixed into the relatively low-viscosity master batch dope, thereby increasing the degree of dispersion of the pigment. Generally, the addition of a pigment leads to a reduction in the strength of the produced yarn or fiber. However, through the above-described process, the dispersion of the pigment is improved, which may lead to a reduction in the amount of pigment required for color expression, ultimately improving the strength of the fiber due to the pigment reduction.

Next, in the fourth step S104 of producing the aramid dope-dyed yarn by spinning the mixture dope, the mixture dope produced in the third step S103 is spun to manufacture an aramid dope-dyed yarn. At this time, dry spinning is preferable used as the spinning method.

According to an embodiment of the present invention, the aramid dope-dyed yarn manufactured by the method described above is produced by blend spinning the pigment and the meta-aramid obtained by polymerizing MPD and IPC.

The aramid dope-dyed yarn produced by the above-described manufacturing method preferably contains 0.01 to 2.5 parts by weight of pigment based on 100 parts by weight of meta-aramid fiber. If the content of pigment is less than 0.01 parts by weight based on 100 parts by weight of meta-aramid fiber, a shielding effect by the meta-aramid fiber during the fiberization process of the high-viscosity meta-aramid fiber occurs, making it difficult to achieve the desired color expression. Additionally, the pigment content is reduced, which may lead to an increased burden on manufacturing costs for achieving the same color expression. On the other hand, if the content of pigment exceeds 2.5 parts by weight based on 100 parts by weight of meta-aramid fiber, there is a higher risk of pigment reaggregation, increasing the likelihood of instability in the fiberization process of meta-aramid fiber.

In the aramid dope-dyed yarn, an undecomposed residue of the pigment at a high temperature of 350°C is preferably 95% or more. This characteristic is related to the heat resistance of an organic pigment itself, necessary for durability under high-temperature conditions in the fiberization process. If the undecomposed residue is less than 95%, it may lead to disadvantages such as changes in content and color composition due to the high-temperature conditions during the manufacturing process, and thus result in color variation in the final product. Additionally, during dry spinning, there is an increased risk of discoloration due to high-temperature spinning conditions and heat treatment conditions during post-processing.

The aramid dope-dyed yarn preferably has a light fastness of grade 4 to 5 measured after 40 hours of exposure to a xenon arc light source according to the KS K ISO 105-B02 measurement method. As such, the aramid dope-dyed yarn according to an embodiment of the present invention may achieve high light fastness through the uniform dispersion of the pigment itself.

In addition, the strength of the aramid dyed yarn is preferably 3.0 to 5.5 g/d. This corresponds to the strength of aramid yarn without organic pigment particles (Raw White aramid). Generally, dope-dyed yarn experiences a decrease in strength due to the added pigment, but in the present invention, by minimizing the use of pigment for color expression and enabling uniform distribution of pigment, it is possible to achieve a level of strength that does not cause degradation in physical properties comparable to aramid yarn without pigment, despite the inclusion of organic pigment particles.

The single yarn fineness of the aramid dope-dyed yarn is preferably 0.5 to 5.0 deniers. Generally, the physical properties of aramid dope-dyed yarn are adversely affected by the added pigment, especially influenced by the pigment content. In the aramid dope-dyed yarn according to an embodiment of the present invention, by improving dispersion of the pigment, it is possible to achieve a single yarn fineness of 0.5 to 5.0 deniers, even with the addition of pigment for color expression. As the amount of pigment varies depending on the desired color, the spinning/post-treatment process may differ, but considering that the primary use of aramid dope-dyed yarn is for clothing, it may be produced with a single yarn fineness of 0.5 to 5.0 deniers through post-processing (weaving, knitting).

Hereinafter, the present invention will be described in more detail with reference to Examples. The following Examples are provided to illustrate further the present disclosure and are not intended to limit the scope of the present invention.

### [Examples]

### [Example 1]

Meta-phenylene diamine (MPD) and isophthaloyl chloride (IPC) were polymerized to produce meta-aramid dope (Arawin, Toray Advanced Materials Korea Inc.).

Next, 1% by weight of pigment was mixed with the produced meta-aramid dope to produce a master batch dope. At this time, dispersion treatment was conducted to achieve a particle size distribution of the pigment in the master batch dope that was less than 5 µm. Additionally, the solution viscosity of the master batch dope was set to 5 poise at 25 °C .

Subsequently, a mixture dope was produced by mixing 2,000 parts by weight of meta-aramid dope with 100 parts by weight of the master batch dope. At this time, the solution viscosity of the mixture dope was set to 150 poise at 100°C and 350 poise at 80 °C .

Next, the produced mixture dope was subjected to dry spinning to produce dope-dyed yarn.

### [Example 2]

Dope-dyed yarn was produced in the same manner as in Example 1, with the exception that the pigment content for producing the master batch dope was 5% by weight.

### [Example 3]

Dope-dyed yarn was produced in the same manner as in Example 1, with the exception that the pigment content for producing the master batch dope was 10% by weight.

### [Example 4]

Dope-dyed yarn was produced in the same manner as in Example 1, with the exception that the pigment content for producing the master batch dope was 0.1% by weight.

### [Example 5]

Dope-dyed yarn was produced in the same manner as in Example 1, with the exception that the solution viscosity of the master batch dope was set to 50 poise at 25 °C and the solution viscosity of the mixture dope was set to 300 poise at 100 °C and 650 poise at 80 °C .

### [Comparative Examples]

### [Comparative Example 1]

Dope-dyed yarn was produced in the same manner as in Example 1, with the exception that dispersion treatment was not conducted to achieve a particle size distribution of the pigment that was less than 5 µm.

### [Comparative Example 2]

Dope-dyed yarn was produced in the same manner as in Example 1, with the exception that the pigment content for producing the master batch dope was 0.05% by weight.

### [Comparative Example 3]

Dope-dyed yarn was produced in the same manner as in Example 1, with the exception that the pigment content for producing the master batch dope was 11% by weight.

### [Comparative Example 4]

Dope-dyed yarn was produced in the same manner as in Example 1, with the exception that the solution viscosity of the master batch dope was set to 4 poise at 25 °C and the solution viscosity of the mixture dope was set to 140 poise at 100 °C and 340 poise at 80°C .

### [Comparative Example 5]

Dope-dyed yarn was produced in the same manner as in Example 1, with the exception that the solution viscosity of the master batch dope was set to 51 poise at 25 °C and the solution viscosity of the mixture dope was set to 310 poise at 100°C and 660 poise at 80°C .

Physical properties were measured through the following experimental example using the dope-dyed yarns produced in Examples 1 to 5 and Comparative Examples 1 to 5, and the results are shown in Tables 1 and 2 below.

### [Experimental Example]

### (1) Visual observation of presence of precipitation

The produced master batch dope was left undisturbed in a transparent container at a temperature of 25 °C, and the boundary surface due to precipitation was visually observed for 30 days. The occurrence of precipitation was recorded in Table 1, marked as "Yes," and if no precipitation occurred, it was marked as "No". The intermediate degree was marked as "Intermediate"

### (2) Measurement of dispersion particle size

For the produced dope-dyed yarn, the dispersion particle size was measured using an analog particle size analyzer (grind gauge) for 30 days.

### (3) Measurement of color difference (ΔE)

For the produced master batch dope, color difference was measured using a colorimeter (KONICA MINOLTA, cm-3600a) based on the color measurement method over 30 days from the date of sampling.

### (4) Measurement of light fastness

For the produced aramid dope-dyed yarn, a light fastness was measured after 40 hours of exposure to a xenon arc light source according to the KS K ISO 105-B02 measurement method.

### (5) Measurement of single yarn fineness and strength

The single yarn fineness and strength of the produced dope-dyed yarn were measured using a Vibroskop device under the conditions of 25 °C and 65% RH.

**[Table 1]**

| | | Day 1 | Day 2 | Day 3 | Day 5 | Day 15 | Day 30 |
|---|---|---|---|---|---|---|---|
| Visual observation of presence of precipitation | Example 1 | No | No | No | No | No | No |
| | Example 2 | No | No | No | No | No | No |
| | Example 3 | No | No | No | No | No | No |
| | Example 4 | No | No | No | No | No | No |
| | Example 5 | No | No | No | No | No | No |
| | Comparative Example 1 | No | No | No | Intermediate | Yes | Yes |
| | Comparative Example 2 | No | No | No | No | No | No |
| | Comparative Example 3 | No | No | No | Yes | Yes | Yes |
| | Comparative Example 4 | No | No | Intermediate | Yes | Yes | Yes |
| | Comparative Example 5 | Yes | Yes | Yes | Yes | Yes | Yes |
| Dispersion particle size [*µ*m] | Example 1 | 2 | 2 | 2 | 2 | 2 to 3 | 2 to 3 |
| | Example 2 | 1.5 to 2 | 2 | 2 | 2 | 2 | 2 to 3 |
| | Example 3 | 2 | 2 | 2 | 2 to 3 | 3 | 3 to 4 |
| | Example 4 | 1.5 to 2 | 1.5 to 2 | 1.5 to 2 | 2 | 2 | 2 to 3 |
| | Example 5 | 2 | 2 | 2 | 2 to 3 | 3 | 3 to 4 |
| | Comparative Example 1 | 5 to 6 | 5 to 6 | 5 to 6 | 5 to 6 | 10 | 10 to 15 |
| | Comparative Example 2 | 2 | 2 to 3 | 5 | 5 to 6 | 5 to 6 | 10 |
| | Comparative Example 3 | 5 | 5 | 5 | 5 to 6 | 10 | 10 |
| | Comparative Example 4 | 5 to 6 | 5 to 6 | 5 to 6 | 5 to 10 | 5 to 10 | 5 to 10 |
| | Comparative Example 5 | 5 to 10 | 5 to 10 | 5 to 10 | 5 to 10 | 5 to 10 | 5 to 10 |
| Master batch ΔE | Example 1 | 0.82 | 0.81 | 0.94 | 0.88 | 1.09 | 1.04 |
| | Example 2 | 0.72 | 0.67 | 0.75 | 0.89 | 0.91 | 0.91 |
| | Example 3 | 0.83 | 0.82 | 0.91 | 0.91 | 1.10 | 1.22 |
| | Example 4 | 0.88 | 0.92 | 0.91 | 0.94 | 1.00 | 1.02 |
| | Example 5 | 0.82 | 0.81 | 0.91 | 0.88 | 1.19 | 0.99 |
| | Comparative Example 1 | 0.94 | 1.03 | 2.12 | Could not be measured | | |
| | Comparative Example 2 | 0.84 | 1.20 | 1.14 | 1.31 | 1.20 | 1.08 |
| | Comparative Example 3 | 1.03 | 1.05 | 1.17 | Could not be measured | | |
| | Comparative Example 4 | 1.21 | 1.11 | Could not be measured | | | |
| | Comparative Example 5 | Could not be measured | | | | | |

**[Table 2]**

| | Light fastness | Strength (g/d) | Single yarn fineness(de) |
|---|---|---|---|
| Example 1 | 5 | 4.63 | 1.75 |
| Example 2 | 5 | 4.8 | 1.58 |
| Example 3 | 5 | 4.12 | 2.16 |
| Example 4 | 5 | 5.09 | 1.54 |
| Example 5 | 4 | 4.66 | 1.63 |
| Comparative Example 1 | Could not be spun | - | - |
| Comparative Example 2 | Could not be spun | - | - |
| Comparative Example 3 | Could not be spun | - | - |
| Comparative Example 4 | Could not be spun | - | - |
| Comparative Example 5 | Could not be spun | - | - |

As stated in Tables 1 and 2, Examples 1 to 5 all satisfied the configuration of the present invention in terms of dispersion particle size, strength, single yarn fineness, and light fastness. Additionally, Examples 1 to 4 showed no precipitation even after 30 days, maintained a dispersion particle size of less than 5 µm, and exhibited minimal color difference over time.

On the contrary, Comparative Example 1, with a particle size distribution of 5 µm or more, experienced precipitation over time and excessive dispersion, making it impossible for spinning into aramid dope-dyed yarn. In particular, Comparative Example 1 initially had no precipitation, but precipitation occurred after 5 days. The dispersion particle size was initially 5 µm or more, gradually increasing over 30 days, and the color difference could not be measured after 5 days.

Furthermore, Comparative Example 2, with insufficient pigment, showed an increase in dispersion particle size over time, making it impossible for spinning into aramid dope-dyed yarn.

Similarly, Comparative Example 3, with an excessive amount of pigment, experienced precipitation over time and excessive dispersion particle size, making it impossible for spinning into aramid dope-dyed yarn.

Moreover, Comparative Example 4, with low viscosity in both master batch dope and mixture dope, experienced precipitation over time and excessive dispersion particle size, making it impossible for spinning into aramid dope-dyed yarn.

Similarly, Comparative Example 5, with high viscosity in both master batch dope and mixture dope, quickly experienced precipitation and excessive dispersion particle size, making it impossible for spinning into aramid dope-dyed yarn.

In addition, in all Comparative Examples except Comparative Example 2, precipitation or coagulation occurred over time, resulting in partially uneven measured values when measuring color difference, leading to an inability to secure the reliability of the data. As a result, it can be confirmed that the color difference cannot be measured.

While the invention has been shown and described with reference to certain exemplary embodiments thereof, the invention should not be construed as being limited to the embodiments set forth herein, and various changes in form and details may be made therein by those of ordinary skill in the art without departing from the spirit and scope of the present invention.

## Claims

1. An aramid dope-dyed yarn being manufactured by blend spinning a mixture dope comprising: a master batch dope comprising a pigment and a meta-aramid dope, which is obtained by polymerizing m-phenylene diamine (MPD) and isophthaloyl chloride (IPC); and the meta-aramid dope.

2. The aramid dope-dyed yarn of claim 1, wherein the aramid dope-dyed yarn contains 0.01 to 2.5 parts by weight of pigment based on 100 parts by weight of meta-aramid fiber.

3. The aramid dope-dyed yarn of claim 1, wherein the aramid dope-dyed yarn has a light fastness of grade 4 to 5 measured after 40 hours of exposure to a xenon arc light source according to KS K ISO 105-B02 measurement method.

4. The aramid dope-dyed yarn of claim 1, wherein an undecomposed residue of the pigment at a temperature of 350° C is 95% or more.

5. The aramid dope-dyed yarn of claim 1, wherein a strength of the aramid dope-dyed yarn is 3.0 to 5.5 g/d.

6. The aramid dope-dyed yarn of claim 1, wherein the aramid dope-dyed yarn has a single yarn fineness of 0.5 to 5.0 deniers.

7. A method of manufacturing an aramid dope-dyed yarn, comprising:
a first step of producing a meta-aramid dope by polymerizing m-phenylene diamine (MPD) and isophthaloyl chloride (IPC);
a second step of producing a master batch dope by dispersing and mixing a pigment and the meta-aramid dope;
a third step of producing a mixture dope by mixing the meta-aramid dope and the master batch dope; and
a fourth step of spinning the mixture dope to manufacture an aramid dope-dyed yarn.

8. The method of claim 7, wherein the master batch dope in the second step contains 0.1 to 10% by weight of pigment.

9. The method of claim 7, wherein a solution viscosity of the master batch dope is 5 to 50 poise at 25 °C .

10. The method of claim 7, wherein a solution viscosity of the mixture dope is 150 to 300 poise at 100°C and 350 to 650 poise at 80°C .

11. The method of claim 7, wherein a dispersion particle size of the pigment in the master batch dope is less than 5 *µ*m.

12. The method of claim 7, wherein the fourth step is performed by dry spinning.
